Europäisches Patentamt

European Patent Office    (11) Publication number:    **0 190 822**

Office européen des brevets    **A1**

(19)

(12)    # EUROPEAN PATENT APPLICATION

(21) Application number: **86300184.8**    (51) Int. Cl.⁴: **F 16 D 25/14**
                                                        **F 16 D 55/40**

(22) Date of filing: **14.01.86**

(30) Priority: **31.01.85 US 696754**

(43) Date of publication of application:
**13.08.86  Bulletin  86/33**

(84) Designated Contracting States:
**DE FR GB**

(71) Applicant: **GENERAL MOTORS CORPORATION**
**General Motors Building 3044 West Grand Boulevard**
**. Detroit Michigan 48202(US)**

(72) Inventor: **Smith, Lyle Blair**
**35662 Florane**
**Westland Michigan 48185(US)**

(74) Representative: **Breakwell, John Neil Bower et al,**
**GM Patent Section Luton Office (F6) P.O. Box No. 3**
**Kimpton Road**
**Luton Beds. LU2 OSY(GB)**

(54) **Pressure control valve.**

(57) A pressure control valve for a selectively engageable friction device (10) has two flow rates for controlling piston movement during the application of the friction device.

The valve (58) includes a spring-loaded valve capsule (60) slidably disposed in a stepped-diameter bore (44) between a feed passage (52) and a control passage (36). When the fluid pressure in the feed passage exceeds the fluid pressure in the control passage by a predtermined amount, the capsule is thereby moved in the bore against the bias of the spring (70) so tht the outer cylindrical surface of the capsule and the largest-diameter portion (46) or the bore co-operate to form an orifice which permits a high flow rate, resulting in a rapid fill operation of the piston cylinder (24) of the friction device.

The pressure in the piston cylinder, sensed in the control passage, and the biasing force of the spring move the capsule into the next-largest diameter portion of the bore to provide a reduced flow during the final pressurization of the piston cylinder of the friction device.

A cheque valve (62) in the capsule permits rapid exhausting of the friction device when the feed passage is exhausted.

Fig.1

**0190822**

JNBB/1761

## PRESSURE CONTROL VALVE

This invention relates to a pressure control valve for controlling the flow of pressurized fluid to, and the exhaust of fluid from, a fluid-operated friction device.

The invention is more particularly concerned with a pressure control for providing a dual-slope pressure function during the engagement of a friction device.

Prior-art dual-slope pressure controls utilize either a single orifice and an accumulator or a variable-pressure regulator valve and an accumulator. Although such devices do provide satisfactory controls, they require a significant amount of space. Since space is a valuable commodity in the context of transmission controls, it is desirable to reduce the space requirements where possible.

The present invention is concerned with providing for controlled engagement of a friction clutch or other friction device by means of a pressure control valve that is effective to control the pressure-time relation during fill and engage periods in the engagement of the friction device.

To this end, a pressure control valve in accordance with the present invention is characterised by the features specified in the characterising portion of claim 1.

The pressure control valve in accordance with the present invention thus has two orifices, one of which provides rapid flow for fast filling and the other of which provides controlled pressure rise for smooth final engagement.

Thereby, a dual-slope pressure function is available without the need for an accumulator to control pressure rise, inasmuch as the control valve ·capsule slidably disposed in the stepped-diameter bore co-operates therewith to form two distinct orifices effective to establish distinct flow rates to a friction device during engagement thereof.

In a specific embodiment of a pressure control valve in accordance with the present invention for controlling the flow of pressurized fluid to, and the exhaust of fluid from, a fluid-operated friction device, the valve includes a cylindrical valve capsule slidably disposed in a stepped-diameter bore communicating fluid between a feed passage and a control passage, and the capsule is spring-loaded into an intermediate-diameter bore in a direction towards a smaller-diameter bore, and responds to a predetermined pressure in the feed passage to move into a larger-diameter bore and co-operates therewith to establish a high-flow orifice for fast fill, and returns to the intermediate-diameter bore at a predetermined pressure in the control passage to establish a low-flow orifice, whereby the pressure in the control passage rises at a slower rate during final engagagement of the friction device.

In the drawing:

Figure 1 is a fragmentary sectional view of a friction device and shaft assembly incorporating a dual-orifice pressure control valve in accordance with the present invention, and showing the control valve in one operating position;

Figure 2 is a sectional view showing a portion of Figure 1 with the control valve in another operating position;

Figure 3 is a sectional view, with parts in elevation, of a dual-orifice pressure control valve in accordance with the invention in an engagement mode of operation; and

Figure 4 is a view similar to Figure 3 but showing the control valve in an exhaust mode of operation.

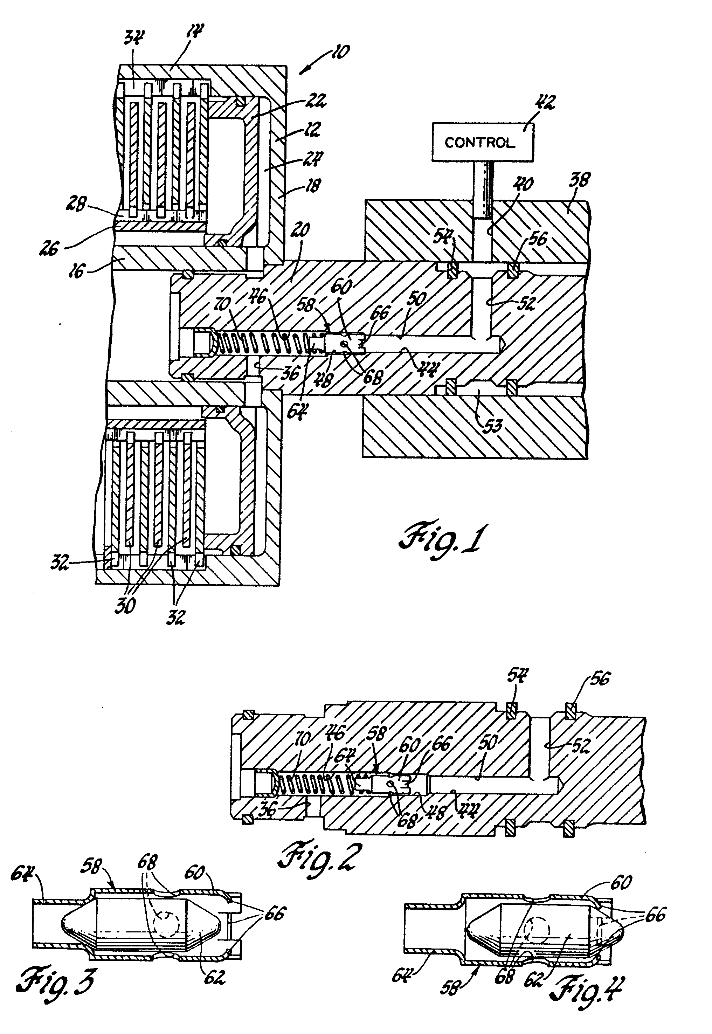

With reference now to the drawing, wherein like characters represent the same or corresponding parts throughout the several views, there is shown in Figure 1 a friction device generally designated 10. The friction device 10 includes a housing 12 having an outer cylindrical portion 14, an inner cylindrical portion 16 and a connecting hub portion 18. The inner cylindrical portion 16 is drivingly connected to a shaft 20.

A fluid-operated piston 22 is slidably disposed in the inner and outer cylindrical portions 14 and 16, and co-operates with the hub 18 to form an apply chamber 24. The piston 22 is preferably spring-loaded towards the hub 18 by springs, not shown. A cylindrical hub member 26 is rotatably disposed or otherwise supported relative to the cylindrical portion 16. The hub member 26 has a spline portion 28 to which is splined a plurality of friction discs 30. The friction discs 30 are interleaved with a plurality of friction discs 32 which are drivingly connected to a spline portion 34 formed on the cylindrical portion 14 of the housing 12.

The apply chamber 24 is in fluid communication with a control passage 36 which, as will later be described, communicates pressurized fluid to the apply chamber 24. As is well-known in friction devices such as friction device 10, when the apply chamber 24 is pressurized the piston 22 will thereby be moved to cause frictional interengagement of the friction discs 30 and 32, such that a torque-transmitting relationship is established between the housing 12 and the hub member 26. This torque-transmitting relationship may be effective to provide simultaneous rotation of the shaft 20 and hub member 26, or alternatively to provide braking of the shaft 20 if the hub member 26 is connected to a stationary member such as a part of the transmission housing, not shown.

The shaft 20 is rotatably supported in a portion of the transmission housing designated 38. The housing 38 has formed therein a feed passage 40 which is in communication with a conventional transmission control valve and pump assembly 42. The shaft 20 has formed therein an axially extending stepped-diameter bore 44 which has a large-diameter portion 46, an intermediate-diameter portion 48 and a small-diameter portion 50. The large-diameter portion 46 is in fluid communication with the control passage 36, and the small-diameter portion 50 is in fluid communication with a radial feed passage 52 which communicates with the outer surface of the shaft 20.

The radial feed passage 52 communicates with a space 53 formed between a pair of spaced annular seals 54 and 56, which space 53 also communicates with the feed passage 40 formed in the housing 38. The stepped-diameter bore 44 houses a control valve, generally designated 58. As is best seen in Figures 3 and 4, the control valve 58 includes a cylindrical capsule 60 within which there is a pellet check valve 62. The capsule 60 has a reduced-diameter portion 64 which is smaller than the outer diameter of the check valve 62 and can be effectively sealed thereby, as is shown in Figure 3.

The capsule 60 also has a plurality of inwardly bent tang portions 66 which, as is shown in Figure 4, provide a rightward stop for the check valve 62 while permitting fluid flow past the outer surface thereof. The capsule 60 has a plurality of radial passages (holes) 68 which communicate the inner area of the capsule 60 with the stepped-diameter bore intermediate-diameter portion 48, as shown in Figure 1, or large-diameter portion 46, as shown in Figure 2. The valve 58 also includes a spring member 70 which is disposed in the large-diameter portion 46 and urges the capsule 60 rightwardly such that the right-hand end thereof seats at the intersection of the small-diameter portion 50 and the intermediate-diameter portion 48.

When the transmission control assembly 42 is manipulated to cause engagement of the friction device 10, the feed passages 40 and 52 and the small-diameter portion 50 will be pressurized. The fluid pressure cannot be immediately transmitted through the capsule 60 to the control passage 36 and apply chamber 24. Therefore, the small-diameter portion 50 will be at a pressure significantly greater than the large-diameter portion 46, resulting in leftward movement of the capsule 60 until the radial passages 68 communicate fluid from the small-diameter portion 50 to the large-diameter portion 46. The outer cylindrical surface of the capsule 60 co-operates with the surface of the large-diameter portion 46 to form a flow control orifice which establishes the rate of fluid flow to the control passage 36 and apply chamber 24.

As the fluid flows into the apply chamber 24, the pressure in the apply chamber 24, the control passage 36 and the large-diameter portion 46 will ·increase. The pressure increase will cause the piston 22 to move into engagement with the friction disc 32 immediately adjacent the piston 22, thereby initiating engagement of the friction device 10. When this pressure level is reached, the spring force in the spring 70 and the pressure in the large-diameter portion 46 will be sufficient to overcome the pressure in the intermediate-diameter portion 48, such that the capsule 60 will return to the position shown in Figure 1. In this position, further fluid flow to the apply chamber 24 must pass between the outer surface of the capsule 60 and the inner surface of the intermediate-diameter portion 48. Since this clearance is less than the clearance with the diameter 46, there will be a reduced flow and a less rapid pressure rise in the apply chamber 24. Thus, the final portion of the engagement of the friction device 10 takes place at a slower rate than the initial, chamber-fill portion. When the control assembly 42 provides a signal for the disengagement of the friction device 10, the feed passage 40 will be connected to exhaust. At this time, the pressure in the large-diameter portion 46 will cause the check valve 62 to move to the position shown in Figure 4, such that there will be rapid exhausting of the apply chamber 24.

From the foregoing, it will be evident that the present invention provides a rapidly rising pressure function which gives way to a less rapidly rising pressure function during the engagement of the friction device by establishing two distinct orifice relationships between the pressure feed passage and the friction device control passage.  It will also be evident that, although these orifices provide controlled engagement, they do not interfere with or limit the pressure exhaust function.

Thus in the embodiment of the invention which has been described, an improved control valve for establishing a dual-slope pressure function for engagement and disengagement of a selectively engageable friction device includes a spring-loaded capsule disposed in a stepped-diameter bore between a feed passage and a control passage, such that the capsule moves to a first position on increased pressurization of the feed passage to permit high fluid flow and a rapid pressure increase rate in the control passage, and then moves to the original position when there is a predetermined pressure differential between the feed and control passages, to thereby restrict fluid flow and reduce the rate of pressure rise in the control passage.

Claim:

1.    A pressure control valve for controlling the flow of pressurized fluid to, and the exhaust of fluid from, a fluid-operated friction device, characterised by a feed passage (52), a friction device control passage (36), and valve means (58) for controlling the communication of fluid under pressure between the said passages (52,36), the said valve means (58) including a stepped-diameter bore (44) having three different-diameter portions (46,48,50), a valve capsule (60) disposed in one bore portion (48) and having a clearance therewith to establish a first orifice, check valve means (62) disposed in the valve capsule (60) for preventing direct fluid flow from the feed passage (52) to the control passage (36), spring means (70) urging the valve capsule (60) into the said one bore portion (48) to seat against a step formed between the first (50) and the second (48) of the said three diameters, radial passage means (68) in the valve capsule (60) for by-passing the check valve means (62) when fluid flow is from the feed passage (52) to the control passage (36), the valve capsule (60) being movable against the bias of the spring means (70) into the third (46) of the three bore portions (46,48,50) when the fluid pressure in the feed passage (52) is greater than the fluid pressure in the control passage (36) by at least a predetermined amount, the third bore portion (46), the valve capsule (60) and the radial passage means (68) co-operating to establish a second orifice for controlling fluid flow from the feed passage (52) to the control passage (36), with the second orifice providing a higher flow rate than the first orifice to provide for fast fill through the control passage (36), and the first orifice establishing a lower flow rate to permit the fluid pressure in the control passage (36) to become equal to the fluid pressure in the feed passage (52) at a rate slower than the said fast fill.

1/1

0190822

CONTROL

Fig.1

Fig.2

Fig.3

Fig.4

**0190822**

European Patent
Office

**EUROPEAN SEARCH REPORT**

Application number

EP 86 30 0184

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y | US-A-3 152 606 (VEDDER) <br> * Whole document * <br><br> --- | 1 | F 16 D 25/14 <br> F 16 D 55/40 |
| Y | GB-A- 753 516 (GIRLING LTD.) <br> * Whole document * <br><br> --- | 1 | |
| A | DE-A- 538 802 (ORENSTEIN & KOPPEL) <br><br> --- | | |
| A | JP-A-58 142 035 (NIPPON AIR BRAKE) <br><br> --- | | |
| A | US-A-2 634 947 (GARDNER) <br><br> ----- | | |

| | | | TECHNICAL FIELDS SEARCHED (Int Cl.4) |
|---|---|---|---|
| | | | F 16 D 25/00 <br> F 16 D 55/00 |

The present search report has been drawn up for all claims

| Place of search | Date of completion of the search | Examiner |
|---|---|---|
| THE HAGUE | 17-03-1986 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82